# EUROPEAN PATENT APPLICATION

(11) **EP 3 007 122 A1**
(43) Date of publication of application: **13.04.2016**
(21) Application number: 14187917.1
(22) Date of filing: 07.10.2014
(51) Int. Cl.: G06Q 20/32

(54) **Method for facilitating the selection of a virtual card for an NFC transaction**

(71) Applicant: NXP B.V., 5656 AG Eindhoven (NL)
(72) Inventor: Kareti, Sreenadh, 5656 AG Eindhoven (NL); Kulkarni, Giten, 5656 AG Eindhoven (NL)
(74) Representative: Krott, Michel

(57) **Abstract**

There is disclosed a method for facilitating the selection of a virtual card for a near field communication transaction to be carried out by a mobile device, the method comprising: retrieving a list of available virtual cards from a virtual card registry; generating, by a machine learning service, a preselection containing at least one virtual card which is relevant to a context in which the mobile device is used. Furthermore, a corresponding computer program, article of manufacture and mobile device are disclosed.

## Description

### FIELD

The present disclosure relates to a method for facilitating the selection of a virtual card for a near field communication transaction. Furthermore, the present disclosure relates to a corresponding computer program. Furthermore, the present disclosure relates to a corresponding article of manufacture including a non-transitory computer-readable storage medium having instructions stored thereon. Furthermore, the present disclosure relates to a mobile device for carrying out a near field communication transaction.

### BACKGROUND

Near field communication (NFC) transactions play an increasingly important role in daily life. For example, payments may be done by tapping a terminal at a point of sale with an NFC-enabled mobile device. It is expected that the use of NFC for carrying out transactions will grow significantly. NFC-enabled mobile devices may contain so-called virtual cards which may support such transactions.

### SUMMARY

There is disclosed a method for facilitating the selection of a virtual card for a near field communication transaction to be carried out by a mobile device, the method comprising: retrieving a list of available virtual cards from a virtual card registry; generating, by a machine learning service, a preselection containing at least one virtual card which is relevant to a context in which the mobile device is used.

In illustrative embodiments, the virtual card registry is comprised in the mobile device, and the machine learning service is executed on said mobile device.

In illustrative embodiments, the method further comprises presenting the preselection to a user of the mobile device, and requesting said user to select the virtual card for the near field communication transaction.

In illustrative embodiments, the method further comprises ranking, by the machine learning service, the virtual cards contained in the preselection in dependence on their relevance to said context.

In illustrative embodiments, the method further comprises selecting the virtual card having the highest ranking in said preselection for the near field communication transaction.

In illustrative embodiments, the method further comprises providing, by the machine learning service, the preselection to a virtual card selector application which, when being executed on said mobile device, carries out or controls the selection of a virtual card from the preselection.

In illustrative embodiments, generating the preselection comprises preselecting the at least virtual card in dependence on at least one context signal which is indicative of said context.

In illustrative embodiments, the context signal is provided to the machine learning service by a user application executed on the mobile device.

In illustrative embodiments, the context signal is provided to the machine learning service by a system application executed on the mobile device or by an operating system executed on the mobile device.

In illustrative embodiments, the mobile device comprises at least some of the available virtual cards.

In illustrative embodiments, a cloud database comprises at least some of the available virtual cards.

In illustrative embodiments, generating the preselection comprises preselecting the at least one virtual card in dependence on verified and/or falsified correlations between virtual cards and predefined context signals.

Furthermore, there is disclosed a computer program comprising instructions which, when being executed by a processing unit, cause said processing unit to perform a method of the kind set forth.

Furthermore, there is disclosed an article of manufacture including a non-transitory computer-readable storage medium having instructions stored thereon that, when being executed by a processing unit, cause said processing unit to perform a method of the kind set forth.

Furthermore, there is disclosed a mobile device for carrying out a near field communication transaction, said mobile device comprising a processing unit and a virtual card registry, wherein said processing unit is arranged to: retrieve a list of available virtual cards from the virtual card registry; execute a machine learning service which, when being executed, generates a preselection containing at least one virtual card which is relevant to a context in which the mobile device is used.

### DESCRIPTION OF DRAWINGS

Embodiments will be described in more detail with reference to the appended drawings, in which:
Fig. 1 shows an example of an NFC system;
Fig. 2A shows an illustrative embodiment of a method according to the present disclosure;
Fig. 2B shows a further illustrative embodiment of a method according to the present disclosure;
Fig. 2C shows a further illustrative embodiment of a method according to the present disclosure;
Fig. 3 shows a further illustrative embodiment of a method according to the present disclosure;
Fig. 4 shows an illustrative embodiment of a mobile device according to the present disclosure.

### DESCRIPTION OF EMBODIMENTS

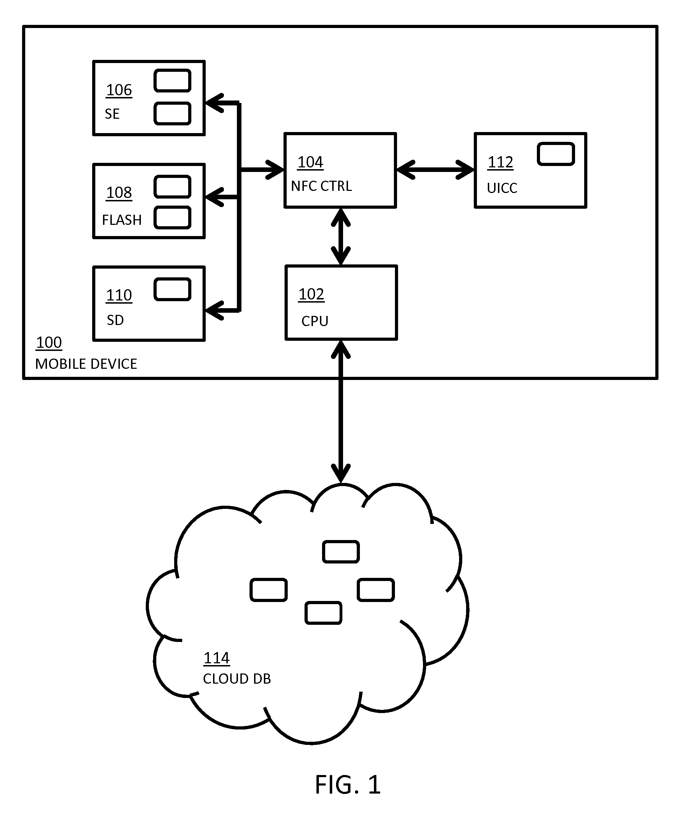

**Fig. 1** shows an example of an NFC system. The NFC system comprises an NFC-enabled mobile device 100 and a cloud database 114. The NFC-enabled mobile device 100 comprises a host processor 102, an NFC controller 104, a generic secure element 106, a secure Flash memory 108, an SD card 110 and a UICC 112. The NFC controller 104 is communicatively coupled to the generic secure element 106, secure Flash memory 108, SD card 110 and UICC 112. It is noted that the secure flash memory 108, SD card 110 and UICC 112 may be regarded as specific types of secure elements. In general, a secure element may be implemented as an embedded chip, more specifically as a tamper-resistant integrated circuit with installed or pre-installed smart-card-grade applications, for instance payment applications, which have a prescribed functionality and a prescribed level of security. Alternatively, so-called Subscriber Identity Modules (SIMs) or Universal Subscriber Identity Modules (USIMs) may be used as secure elements. Furthermore, secure digital (SD) cards, such as traditional SD cards or micro-SD cards, may be used as secure elements. A secure element may be embedded in a mobile device, for example as a small outline package soldered directly on a printed circuit board. Alternatively, a secure element may be comprised in said mobile device as a removable component, for example as a SIM or an SD card.

In the example shown in Fig. 1, a plurality of virtual cards is available for carrying out NFC transactions. More specifically, the secure element 106 contains two virtual cards, the secure flash memory 108 contains two virtual cards, the SD card 110 contains one virtual card, the UICC 112 contains one virtual card, and the cloud database 114 contains four virtual cards. All these virtual cards may be used, in conjunction with applications executed by the host processor 102, for example, for carrying out specific types of NFC transactions. For example, some virtual cards may be specific to payment applications, other virtual cards to ticketing applications, and yet other virtual cards to loyalty card applications. The virtual cards may for example be implemented as emulated smart cards. Emulated smart cards are secure device components which provide the same or a similar functionality as physical smart card ICs, but they may be implemented only in software using HCE technology. The virtual cards may contain sensitive data, for example personal data of a user, which are used during NFC transactions. Furthermore, the virtual cards may contain applications, i.e. computer-executable instructions, which may carry out or facilitate the NFC transactions.

Since multiple virtual cards may be available for an NFC transaction, a user needs to select a virtual card for the service he is intending to use before he presents the mobile device 100 to the terminal, for example via a GUI of the mobile device 100. Thus, the user experience is not seamless, because manual intervention is required. Furthermore, the user needs to have at least some knowledge of the service selection procedure. Furthermore, performance is not optimal because manual operations are required. For example, significant cumulative time may be lost by users entering or exiting a metro station if they need to perform a manual selection of a virtual card at the gate. Also, users may experience inconvenience: imagine a commuter who is holding a brief case and computer bag browsing through a series of icons for selecting the relevant virtual card before tapping a transit terminal or when boarding a bus. Furthermore, when the battery level of the mobile device 100 is low, the user might not be able to select a virtual card, although the mobile device 100 might still be able to execute the service in low-power mode or using power from the terminal's RF field. In view of the above, there may be a need to facilitate the selection of a specific virtual card for an NFC transaction. Furthermore, there may be a need to facilitate the automatic selection of a specific virtual card for an NFC transaction.

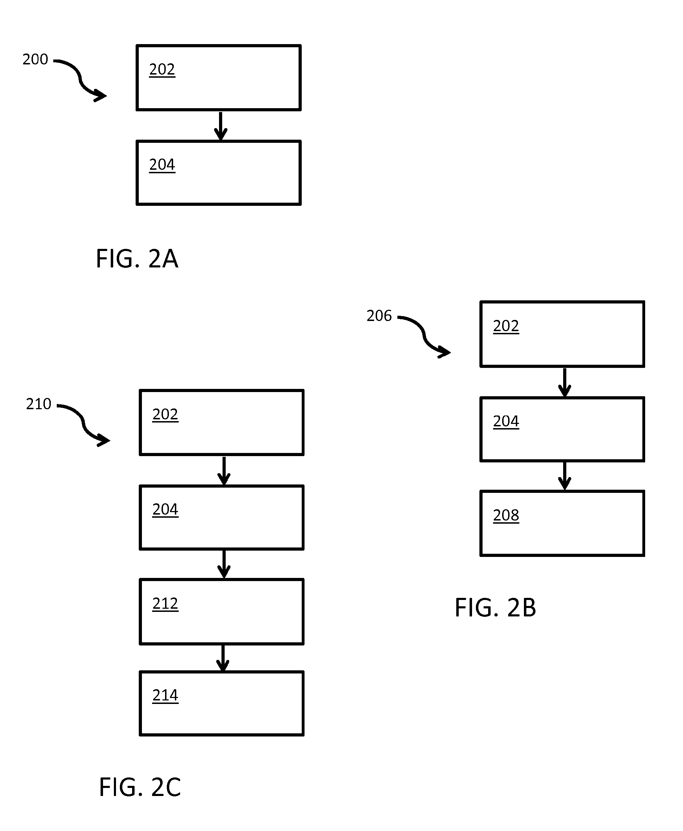

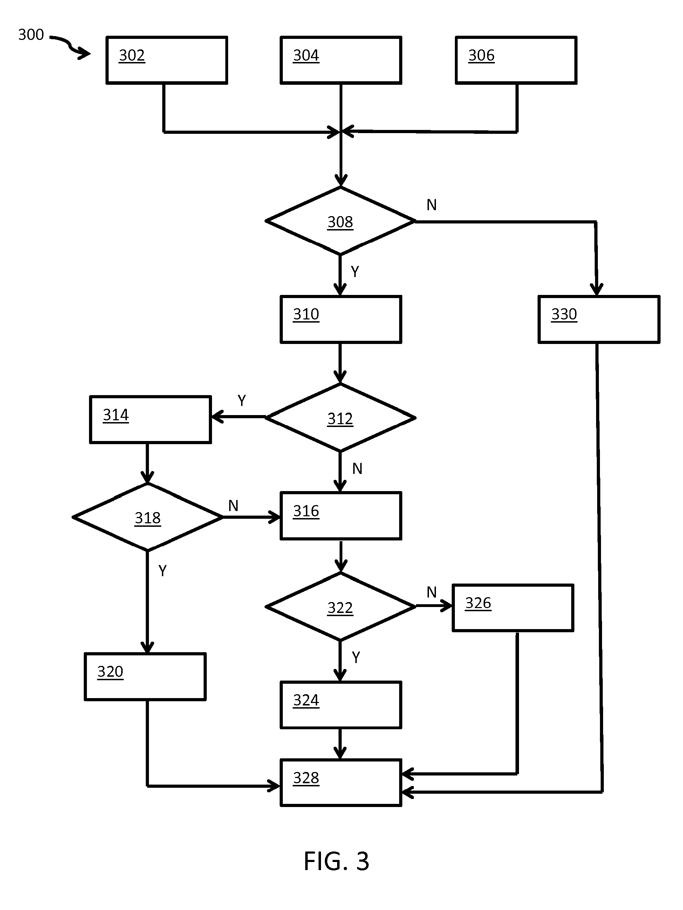

**Fig. 2A** shows an illustrative embodiment of a method 200 according to the present disclosure. The method 200 comprises, at 202, retrieving a list of available virtual cards from a virtual card registry, and, at 204, generating, by a machine learning service, a preselection containing at least one virtual card which is relevant to a context in which the mobile device is used. The use of a machine learning service, i.e. a computer program or system which may be trained with training examples, may enable the identification of virtual cards which are relevant to a particular context. The term 'machine learning service' generally refers to a computer program which is capable of improving, to a certain extent, its own performance, in particular by applying artificial intelligence techniques which mimic human learning, for example learning by repetition and experience. The training examples may take the form of correlations between virtual cards and predefined context signals, such as a specific time and location. For instance, it may be assumed that a particular user regularly pays for goods at a mall on Saturday afternoon. Thus, one training example may take the form of a correlation between a specific virtual card that supports this payment, the location of the mall and a time window on Saturday afternoon. Furthermore, the training examples may take the more specific form of verified and/or falsified correlations between virtual cards and predefined context signals, as will be explained with reference to Fig. 3. It is noted that the virtual card registry may reside in the mobile device, in which case it is relatively easy to access it. Alternatively, but without limitation, the virtual card registry may reside in a cloud server, in which it may be managed centrally, for example. Furthermore, the machine learning service may be executed on the mobile device, for example by a processing unit comprised in said mobile device.

**Fig. 2B** shows a further illustrative embodiment of a method 206 according to the present disclosure. In addition to the steps shown in Fig. 2A, this method 206 comprises, at 208, presenting the preselection to a user of the mobile device, and requesting said user to select the virtual card for the NFC transaction. By presenting only the preselection to the user, instead of a complete list of available virtual cards, the user may be able to find the specific virtual card more easily, while still exercising control over the final selection.

**Fig. 2C** shows a further illustrative embodiment of a method 210 according to the present disclosure. In addition to the steps shown in Fig. 2A, this method 210 comprises, at 212, ranking, by the machine learning service, the virtual cards contained in the preselection in dependence on their relevance to said context, and, at 214, automatically selecting the virtual card having the highest ranking in said preselection for the near field communication transaction. In this way, the automatic selection of the specific virtual card may be facilitated. For example, the machine learning service may provide a ranked preselection to a virtual card selection application, and the virtual card selection application may automatically select the virtual card having the highest ranking. It is noted that the step of ranking the virtual cards does not necessarily to be performed in combination with the step of automatically selecting the virtual card having the highest ranking. It is conceivable, for example, that the step of ranking the virtual cards is performed in order to show a ranked preselection to the user, who may subsequently manually select a virtual card from the preselection in accordance with the embodiment shown in Fig. 2B.

**Fig. 3** shows a further illustrative embodiment of a method 300 according to the present disclosure. This method 300 contains a more detailed set of steps, at least some of which may further facilitate the selection of a specific virtual card. It comprises, at 302, initiating an NFC transaction by a user. That is to say, the user may initiate an NFC transaction by performing a manual operation on the GUI of the mobile device, for example. This manual operation may in turn initiate the preselection of a virtual card. Alternatively or in addition, the preselection may be performed periodically or in response to a specific context signal from the operating system of the mobile device or from an application executed on the mobile device. Thus, the method may contain, at 304, receiving, by the machine learning service, a periodic or context-change trigger signal, in response to which the preselection may be performed. Alternatively or in addition, the preselection may be performed in response to an incoming NFC transaction, for example a request for executing a transaction by a reader at a payment terminal. Thus, the method may comprise, at 306, receiving an incoming NFC transaction.

Then, at 308, it may be checked whether sufficient training examples are available for the machine learning service. That is to say, it may checked whether the machine learning service is capable of generating an adequate preselection of virtual cards. If not, then the preselection may be omitted and the user may select, at 330, a virtual card manually. Otherwise, the machine learning service may, at 310, generate a preselection of virtual cards which are relevant to the context in which the mobile device is used. Next, it may be checked, at 312, whether a function for automatically selecting a virtual card from the preselection (auto-VC-select) has been activated. If so, then the most relevant virtual card may be selected automatically at 314. Next, it may checked, at 318, whether the correct virtual card has been selected. If so, then the mobile device may carry out, at 320, the NFC transaction using the selected virtual card, and at 328 a signal indicative of a successful preselection and final selection may be fed back to the machine learning service as a new training example.

If, at 312, it has been determined that the auto-VC-select function has not been activated, then the preselection may be presented, at 316, to the user, for example by displaying it on the GUI of the mobile device. The same step of presenting the preselection at 316 may be performed if, at 318, it has been determined that the correct virtual card has not been selected. Then, at 322, it may be checked whether the correct virtual card is present among the virtual cards presented to the user. If so, then the user may select, at 324, said correct virtual card and the mobile device may carry out the NFC transaction using the selected virtual card, and at at 328 a signal indicative of a successful preselection may be fed back to the machine learning service as an input for generating a new training example. If not, then the user may, at 326, override the preselection and select the correct virtual card from all available virtual cards, and subsequently the mobile device may carry out the NFC transaction using the selected virtual card. In that case, a signal indicative of a failed preselection may be fed back, at 328, to the machine learning service as an input for generating a new training example.

Thus, by feeding back the success or failure of the preselection - and optionally the success or failure of the automatic final selection - from said preselection, to the machine learning service, the machine learning service may build up a database containing verified and/or falsified correlations between virtual cards and predefined context signals. These verified and/or falsified correlations may subsequently be used for generating a more accurate preselection of virtual cards, which takes into account the degree of success of previous preselections.

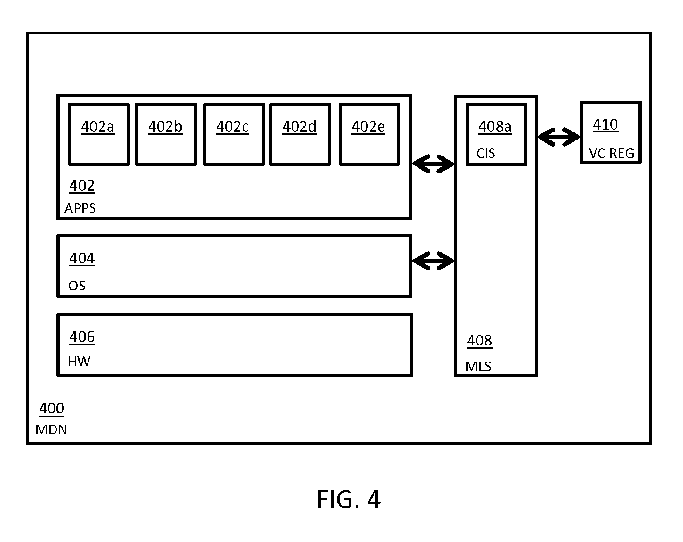

**Fig. 4** shows an illustrative embodiment of a mobile device 400 according to the present disclosure. In this example, the mobile device 400 comprises a plurality of executable applications 402. These applications 402 may for example be executed by a processing unit (not shown) comprised in the mobile device 400. The applications 402a and 402b may be system applications and the applications 402c and 402d may be user applications. Furthermore, application 402e may be a virtual card selector application. Furthermore, the mobile device 400 comprises a machine learning service 408. In the present example, the machine learning service 408 comprises a context identification system 408a. Furthermore, the mobile device 400 comprises an operating system 404 and hardware 406. Furthermore, the mobile device 400 comprises a virtual card registry 410. The virtual card selector application 402e may interact, when being executed, with the machine learning service 408. The virtual card selector application 402e may for example receive the preselection from the machine learning service 408, present it to the user and request said user to make a final selection. Optionally, the virtual card selector application 402e may perform the final selection automatically, i.e. without interaction with the user, in dependence on a ranked preselection generated by the machine learning service 408. The context identification system 408a, which may be regarded as a software module embedded in the machine learning service 408, may support the machine learning service 408 in generating the preselection by receiving and/or retrieving context signals from various sources. The machine learning service 408 may access the virtual card registry 410 in order to retrieve a list of available virtual cards. The operating system 404 may also communicate with the machine learning service 408 in order to provide context signals to the latter, for example. The system applications 402a, 402b and user applications 402c, 402d may also provide context signals to the machine learning service 408.

### Training examples and context identification

The machine learning service 408 may be initialized with benchmarked correlations, i.e. historical information available from other mobile devices. Alternatively, but without limitation, the machine learning service 408 may start from scratch. The machine learning service may receive training data from applications 402a, 402b, 402c, 402d and/or from the operating system 404, either periodically or in response to predefined events. It is noted that the term 'training data' generally refers to a collection of training examples. An application may optionally gather training data over the network from servers or other devices and feed these training data to the machine learning service 408.

A context signal may contain or be indicative of measurement data or of information pertaining to the state or the environment associated with a certain subject, for example with a certain person, device or event. Many types of information from many different sources may be used to establish context signals and/or provide information from which context signals may be derived. Context signals may include, without limitation: the current time, date and day of the week; GPS coordinates; environmental parameters such as noise, light, humidity and temperature; social network site updates; calendar entries; velocity parameters such as current speed and minimum or maximum achieved speed; previous NFC transactions; previous online transactions and browsing information; time zone changes; mobile device system parameters such as battery level, currently opened applications, system performance, connected wireless networks, paired Bluetooth devices and signal strength of a network; current profile or mode of the mobile device, for example silent, outdoor or meeting.

### Context identification system

A context identification system executed on a mobile platform may receive context signals associated with the mobile platform and application-related data from system applications and user applications. Context signals may also be received from a network. Furthermore, the network may include a server, a cloud-based server and/or a database which contains context-related data for generating the context signals. A mobile platform may connect to such a network in order to receive context signals continuously and/or periodically, possibly by executing a network connection application.

### Use cases

Many use cases may be supported by the method, computer program, article of manufacture, and mobile device according to the present disclosure. These use cases may belong to different categories. In the following examples, it is assumed that the machine learning service (MLS) performs, in cooperation with a virtual card selector application, an automatic selection and loading of a specific virtual card (VC) which is suitable for the NFC transaction in question. However, it is noted that, in accordance with the present disclosure, the MLS may only generate a preselection of virtual cards which are relevant to the context in which the user's mobile phone is used. In that case, the virtual card selector application may present the preselection to the user, and the user may perform the final selection of the specific VC.

A first category of use cases may relate to a typical working day. For example, when stepping out of a house, a user may use a VC stored in his mobile phone for locking said house. The MLS may use several context signals, such as switching off the alarm, a change in surrounding temperature, a user calendar, a day of the week. The VC can be a MIFARE® DESFire® card residing in a secure element of the mobile phone. When entering his car, a VC may be selected for unlocking the car and loading user preferences in the electronic system of the car. The previous NFC transaction of locking the house, the walking speed of the user, the temperature of the environment, the light intensity and noise levels may be used as context signals for preselecting virtual cards for this transaction. For example, car access keys may reside in a MIFARE Plus@ card in the UICC of the mobile phone. As soon as the user enters the car, he may place his mobile phone in a mobile phone holder which is equipped with an NFC reader. Subsequently, the MLS may load a VC that contains user preferences for the electronic system of the car. The user preferences may include audio device tuning to a favorite FM station, temperature in the car, window glass position, seating adjustment parameters, etc. When driving to work, the user may pass through a road toll terminal and flash a pre-paid toll pass. Based on GPS coordinates, velocity parameters (for example current velocity, maximum velocity in the past 15 minutes), journey duration, noise levels, the MLS may load a VC which may be a pre-paid toll pass or MIFARE® DESFire®-based credit card for facilitating a payment transaction. Furthermore, when reaching a metro station, the user may pass through an automated fare collection (AFC) terminal. Based on, for instance, GPS coordinates, velocity parameters (e.g. current velocity, maximum velocity in the past 15 minutes), and noise levels, the previous NFC transaction at the toll payment terminal, the MLS may load a VC containing a metro pre-paid ticket. For instance, the ticket may be stored on an emulated SCOSTA on an SD Card of the mobile phone; SCOSTA refers to the Indian standard for smart card operating systems. Furthermore, when buying breakfast at the metro station, the MLS may load a user's meal pass VC or enable a VISA wallet provisioned on a FastPay™ OS for the payment, in dependence on context signals such as the previous transaction at the AFC terminal, GPS coordinates, and velocity parameters. Furthermore, when exiting the metro, the user may again pass through an AFC terminal. The MLS may then load the pre-paid ticket again for checking out. Subsequently, the MLS may load a VC implemented as a MIFARE® DESFire® card residing in a secure element for gaining access to his office, based on the previous NFC transactions, GPS Coordinates, current walking speed, calendar entries, environment temperature and noise levels, for example. When logging on to the office computer, the user may tap the mobile phone on an NFC reader embedded into the computer. In that case, the MLS may load a VC implemented as a MIFARE® Classic@ card residing in an office cloud network for gaining access to the computer, in dependence on context signals such as the previous NFC transactions, GPS Coordinates, current walking speed, calendar entries, environment temperature and noise levels. When the user intends to pay for lunch at the office, the MLS may load a VC containing a Sodexo pass residing in an SD card, in dependence on context signals such as the previous NFC transactions, GPS coordinates, current walking speed, calendar entries, environment temperature and noise levels. When the user intends to print a document on a secure printer installed at the office, the MLS may load a VC with user access information that enables the NFC reader embedded in the printer to initiate a user authentication process. Upon successful authentication, the printer displays a user-specific print queue, for instance, and the user may print the document. The MLS may use previous NFC transactions, calendar entries, social networking updates, environment temperature, velocity parameters, GPS coordinates, noise levels, for generating a ranked preselection of VCs and select the highest-ranking VC for accessing the printer. The user may also go to a fitness center in the evening, for example. In that case, the MLS may load a VC containing membership information, which may enable access to the fitness center and to a locker. A single VC might be used for granting access to the fitness center and the locker, or different ones. In this situation, the MLS may load the VC in dependence on context signals such as the time of the day, day of the week, calendar entries, velocity parameters and GPS coordinates. Furthermore, when the user pays for a drink at the fitness center, he might pay for the drink using a specific VC residing in a secure element of the phone. The MLS may again load a VC in dependence on context signals such as previous NFC transactions, time of the day, day of the week, calendar entries, velocity parameters and GPS coordinates. Finally, when the user reaches a gas station, he might intend to pay with a virtual credit card. In that case, the MLS may load the VC based on gas station location data, GPS coordinates, a fuel level indication from the electronic system of the car, velocity parameters and the time of the day, for example.

A second category of use cases may relate to a typical weekend. For instance, when the user reaches a shopping mall, he may want to pay a parking fee. For this purpose, he might want to use a VC for a pre-paid parking card or credit/debit card residing in an SD card of a mobile phone. The MLS may load the VC in dependence on context signals such as a wakeup alarm time, activities on the mobile phone such as social networking updates, SMS, call records, GPS coordinates, velocity parameters, day of the week, time of the day, previous online transactions such as the online purchase of a movie ticket, noise levels, surrounding environment temperature and calendar entries. When the user goes to a hairdresser in the shopping mall, the MLS may for example present a VC containing a discount coupon for the hairdresser to the user, in dependence on context signals such as the user's call register (call made to the hairdresser for an appointment), SMS (appointment confirmation from the hairdresser), calendar entries, GPS coordinates, previous NFC transactions, velocity parameters and noise levels. Subsequently, the MLS may load a VC for a payment transaction. Furthermore, the user may want to play video games at a play zone in the shopping mall. In that case, the user may tap the mobile phone on a game terminal for starting his preferred game, and the MLS may load a VC issued by the play zone company, in dependence on context signals such as the last executed NFC transaction, noise levels, GPS coordinates, calendar entries, velocity parameters and ambient temperature. When the user eats at a food court, he might want to pay using a credit card. In that case, the MLS may load a virtual credit card, in dependence on the previous NFC transaction, GPS coordinates, noise levels and ambient temperature, for example. When buying groceries at a supermarket in the shopping mall, the user might pay with another virtual credit card. In that case, the MLS may load this virtual credit card. Finally, the user might enter a movie theatre at the shopping mall using a previously received e-ticket. In that case, the MLS may load a VC containing the e-ticket in dependence on context signals such as previous online transactions, previous payment transactions, GPS coordinates, calendar entries and social network site updates.

A third category of use cases may relate to a situation in which the user is struck by illness. For example, the user may have to go to a hospital. In that case, the user may tap his mobile phone on a reader located at the hospital, in order to present a virtual health card for retrieving health records, for instance. The MLS may then load the virtual health card in dependence on context signals such as a telephone call to the hospital or doctor, a confirmation SMS message from the hospital, GPS coordinates and social network site updates. When the user goes to a pharmacy in order to buy medicine, the MLS may load, for instance, a VC containing a loyalty card issued by the pharmacy, followed by a virtual credit/debit card for performing the payment transaction. In that case, the MLS may use previous NFC transactions, health record updates, GPS coordinates, user activity on the phone, velocity parameters and social network site updates, for loading these VCs.

A fourth category of use cases may relate to a situation in which the user is on a business trip. For instance, the user may call for a taxi to the airport and perform a payment transaction by tapping on the point-of-sale (POS) terminal in the taxi. The MLS may load a VC for the payment in dependence on context signals such as previous call records, online check-in data and boarding pass received, websites recently visited by the user, GPS coordinates, velocity parameters, noise levels, ambient temperature, social network site updates and calendar entries. The user may also have an e-boarding pass contained in a VC. In that case, the MLS may load this VC for the baggage drop-off, security and boarding procedures, in dependence on context signals such as online check-in information, boarding pass details, current date and time, GPS coordinates, velocity parameters, noise levels, ambient temperature, social network site updates and calendar entries. Furthermore, if available, an e-passport might be loaded by the MLS, for example after the baggage drop-off NFC transaction in which the e-boarding pass had been presented at the drop-off point. Furthermore, it is conceivable that specific VCs may be loaded for adjusting the user preferences of an on-flight entertainment system, for boarding connecting flights, for passing through immigration services at the destination, for checking in at the reception of a hotel and for opening a room at the hotel, for example.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: NFC-enabled mobile device
- 102: host processor
- 104: NFC controller
- 106: generic secure element
- 108: secure Flash memory
- 110: SD card
- 112: UICC
- 114: cloud database
- 200: facilitation method
- 202: retrieve available virtual cards
- 204: generate preselection of VCs
- 206: facilitation method
- 208: present preselection and request selection
- 210: facilitation method
- 212: rank VCs in preselection
- 214: select highest-ranking VC
- 300: facilitation method
- 302: user initiates NFC transaction
- 304: periodic/context change trigger for VC selection
- 306: incoming NFC transaction
- 308: are sufficient training examples available?
- 310: MLS derives relevant VCs in current context
- 312: is the automatic VC selection configured?
- 314: select most relevant VC
- 316: present relevant VCs to user on MDN's GUI
- 318: is the selected VC correct?
- 320: MDN performs NFC transaction using the selected VC
- 322: is the correct VC present among the VCs displayed on GUI?
- 324: user selects correct VC and MDN performs NFC transaction
- 326: user selects correct VC and selection is fed to MLS as training example
- 328: feedback success or failure to the MLS
- 330: user selects VC manually
- 400: MDN
- 402: applications
- 402a: system application 1
- 402b: system application 2
- 402c: user application 1
- 402d: user application 2
- 402e: VC selector application
- 404: operating system
- 406: hardware
- 408: MLS
- 408a: CIS
- 410: VC registry

### LIST OF ACRONYMS

- CIS: context identification system
- GUI: graphical user interface
- HCE: host card emulation
- IC: integrated circuit
- MDN: NFC-enabled mobile device
- MLS: machine learning service
- NFC: near field communication
- SD: secure digital
- UICC: universal integrated circuit card
- VC: virtual card

## Claims

1. A method for facilitating the selection of a virtual card for a near field communication transaction to be carried out by a mobile device, the method comprising:
retrieving a list of available virtual cards from a virtual card registry;
generating, by a machine learning service, a preselection containing at least one virtual card which is relevant to a context in which the mobile device is used.

2. A method as claimed in claim 1, wherein the virtual card registry is comprised in the mobile device, and wherein the machine learning service is executed on said mobile device.

3. A method as claimed in claim 1, further comprising presenting the preselection to a user of the mobile device, and requesting said user to select the virtual card for the near field communication transaction.

4. A method as claimed in any preceding claim, further comprising ranking, by the machine learning service, the virtual cards contained in the preselection in dependence on their relevance to said context.

5. A method as claimed in claim 3, further comprising selecting the virtual card having the highest ranking in said preselection for the near field communication transaction.

6. A method as claimed in any preceding claim, further comprising providing, by the machine learning service, the preselection to a virtual card selector application which, when being executed on said mobile device, carries out or controls the selection of a virtual card from the preselection.

7. A method as claimed in any preceding claim, wherein generating the preselection comprises preselecting the at least virtual card in dependence on at least one context signal which is indicative of said context.

8. A method as claimed in claim 7, wherein the context signal is provided to the machine learning service by a user application executed on the mobile device.

9. A method as claimed in claim 7, wherein the context signal is provided to the machine learning service by a system application executed on the mobile device or by an operating system executed on the mobile device.

10. A method as claimed in any preceding claim, wherein the mobile device comprises at least some of the available virtual cards.

11. A method as claimed in any preceding claim, wherein a cloud database comprises at least some of the available virtual cards.

12. A method as claimed in any preceding claim, wherein generating the preselection comprises preselecting the at least one virtual card in dependence on verified and/or falsified correlations between virtual cards and predefined context signals.

13. A computer program comprising instructions which, when being executed by a processing unit, cause said processing unit to perform a method as claimed in any preceding claim.

14. An article of manufacture including a non-transitory computer-readable storage medium having instructions stored thereon that, when being executed by a processing unit, cause said processing unit to perform a method as claimed in any one of claims 1 to 12.

15. A mobile device for carrying out a near field communication transaction, said mobile device comprising a processing unit which is arranged to:
retrieve a list of available virtual cards from a virtual card registry;
execute a machine learning service which, when being executed, generates a preselection containing at least one virtual card which is relevant to a context in which the mobile device is used.
